# EUROPÄISCHE PATENTSCHRIFT

(11) **EP 3 256 819 B1**
(45) Veröffentlichungstag und Bekanntmachung des Hinweises auf die Patenterteilung: **21.08.2019**
(21) Anmeldenummer: 16704426.2
(22) Anmeldetag: 11.02.2016
(51) Int. Cl.: G01D 5/245

(54) **SENSORVORRICHTUNG MIT EINER DREHMOMENTSENSOREINRICHTUNG UND EINER INKREMENTALSENSOREINRICHTUNG UND KRAFTFAHRZEUG MIT EINER SOLCHEN SENSORVORRICHTUNG**
SENSOR APPARATUS WITH A TORQUE SENSOR DEVICE AND AN INCREMENTAL SENSOR DEVICE AND VEHICLE WITH SUCH A SENSOR APPARATUS
CAPTEUR AVEC UN DÉTECTEUR DE COUPLE ET UN DÉTECTEUR INCRÉMENTAL ET VÉHICULE MUNI D'UN TEL CAPTEUR

(30) Priorität: 12.02.2015 DE 102015102013
(43) Veröffentlichungstag der Anmeldung: 20.12.2017
(73) Patentinhaber: Valeo Schalter und Sensoren GmbH, 74321 Bietigheim-Bissingen (DE)
(72) Erfinder: SCHOEPE, Roman, 74321 Bietigheim-Bissingen (DE); LEIBFRIED, Hans-Jörg, 74321 Bietigheim-Bissingen (DE); FRÖHLICH, Ekkehart, 74321 Bietigheim-Bissingen (DE)
(74) Vertreter: Pothmann, Karsten
(86) Internationale Anmeldenummer: PCT/EP2016/052874
(87) Internationale Veröffentlichungsnummer: WO 2016/128495

(56) Entgegenhaltungen:
- EP-A1- 2 743 662
- EP-A2- 1 445 173
- DE-A1-102009 033 242
- DE-A1-102013 006 379

## Beschreibung

Die Erfindung betrifft eine Sensorvorrichtung mit einer Inkrementalsensoreinrichtung für eine um eine Drehachse drehbare Welle, insbesondere für eine Lenkwelle eines Kraftfahrzeugs, wobei die Inkrementalsensoreinrichtung zur Erfassung wenigstens einer definierten Drehwinkelposition der Welle ausgebildet ist und ein Sendeelement und ein gehäusefest angeordnetes Empfangselement aufweist, wobei ein vom Sendeelement ausgesendetes und entlang eines Signalweges übertragenes Signal vom Empfangselement empfangbar ist, wobei anhand des vom Empfangselement empfangenen Signals erkennbar ist, ob sich die Welle in der definierten Drehwinkelposition befindet oder nicht, und wobei die Inkrementalsensoreinrichtung dazu ausgebildet ist, bei Erreichen der definierten Drehwinkelposition der Welle einen Signalimpuls zu erzeugen. Ferner betrifft die Erfindung ein Kraftfahrzeug mit einer solchen Sensorvorrichtung.

Sensorvorrichtungen für Lenkwellen von Kraftfahrzeugen mit Inkrementalsensoreinrichtungen sind aus dem Stand der Technik grundsätzlich bekannt, beispielsweise aus der DE 10 2013 006 379 A1.

Mit einer Inkrementalsensoreinrichtung kann wenigstens eine diskrete, definierte Drehwinkelposition einer Welle - beispielsweise ein Nulldurchgang - erfasst werden, so dass mit einer Inkrementalsensoreinrichtung insbesondere die Anzahl der Umdrehungen einer Welle ermittelt werden kann. In Kraftfahrzeugen wird mit derartigen Inkrementalsensoreinrichtungen üblicherweise die Anzahl der Umdrehungen der Lenkwelle und damit die Anzahl der Lenkradumdrehungen erfasst, um ein anderes, absolutes, vorzugsweise analoges bzw. kontinuierliches, Lenkwinkelsignal zu plausibilisieren. Anhand des digitalen Signals der Inkrementalsensoreinrichtung kann nämlich grob festgestellt werden, in welchem Winkelbereich der absolute Lenkwinkelbereich liegen soll, so dass eine Überprüfung des gemessenen absoluten Winkels möglich ist.

Derartige Inkrementalsensoreinrichtungen ermöglichen ferner die Verwendung von Lenkwinkelsensoren, deren Lenkwinkeldetektionsbereich lediglich 360 Grad beträgt, da die Anzahl der Umdrehungen der Lenkwelle bzw. des mit der Lenkwelle drehfest verbundenen Lenkrads mit der Inkrementalsensoreinrichtung erfasst werden kann, so dass aus der erfassten Anzahl der Umdrehungen sowie dem aktuellen Winkel während einer Umdrehung der absolute Lenkwinkel ermittelt werden kann.

Die Inkrementalsensoreinrichtungen erzeugen dabei ein digitales bzw. ein diskretes Signal, insbesondere einen Signalimpuls, wenn die Welle die vordefinierte Drehwinkelposition erreicht. Dabei wird das Signal bzw. der Signalimpuls bei den aus dem Stand der Technik bekannten Inkrementalsensoreinrichtungen, wie beispielsweise bei der in der vorgenannten DE 10 2013 006 379 A1 beschriebenen Inkrementalsensoreinrichtung, üblicherweise aufgrund einer Relativbewegung eines drehfest mit der Welle verbundenen Permanentmagneten relativ zu einem ortsfesten bzw. stationär angeordneten, magnetischen Sensor bzw. einem ortsfest angeordneten Empfangselement erzeugt. Der Permanentmagnet ist dabei üblicherweise so angeordnet, dass er bei einer Drehung der Welle eine ringförmige Bahn in Umfangsrichtung beschreibt, die an dem ortsfest angeordneten Sensor bzw. dem Empfangselement vorbeiführt, so dass beim Passieren des Sensors bzw. dem Empfangselement ein Signalimpuls erzeugt wird.

Sensorvorrichtungen mit einer Inkrementalsensoreinrichtung weisen häufig zusätzlich noch eine Drehmomentsensoreinrichtung auf, wie beispielsweise die in der vorgenannten DE 10 2013 006 379 A1 beschriebene Sensorvorrichtung, wobei Drehmomentsensoreinrichtungen als solche aus dem Stand der Technik ebenfalls grundsätzlich bekannt sind, beispielsweise aus der DE 10 2010 033 769 A1, der DE 10 2012 014 208 A1 oder der DE 10 2012 024 383 A1.

Die DE 10 2009 033 242 A1 beschreibt eine Sensoranordnung, umfassend einen Drehmomentsensor zur Messung des an eine erste Welle angreifenden Drehmoments, wobei die Sensoranordnung eine Drehwinkel-Indexeinheit aufweist, welche so ausgelegt ist, dass sie die Winkelstellung der ersten Welle bezüglich eines definierten Drehwinkels und/oder definierten Drehwinkelbereichs erfassen und/oder identifizieren kann.

Die EP 1 445 173 A2 beschreibt eine Drehwinkelerfassungseinrichtung mit einem reduzierten Leistungsverbrauch. Ein magnetoresistives Element erzeugt ein erstes und ein zweites Analogsignal, welches sich zyklisch und kontinuierlich ändert, sobald eine Lenkwelle um 60°gedreht wird. Ein Mikrocomputer be stimmt den Drehwinkel der Lenkwelle aus dem Ausgabewert und der Zyklenanzahl der Analogsignale.

Die EP 2 743 662 A1 beschreibt eine Vorrichtung für ein Kraftfahrzeug, mit einer Drehmomentsensoreinrichtung zur Erfassung eines auf eine Lenkwelle des Kraftfahrzeugs aufgebrachten Drehmoments, wobei die Drehmomentsensoreinrichtung einen magnetischen Stator aufweist, der zum Leiten von magnetischem Fluss von einem Magneten hin zu zumindest einem Flussleiter und hierdurch zu zumindest einem Magnetsensor der Drehmomentsensoreinrichtung ausgebildet ist, wobei der zumindest eine Magnetsensor als SMD-Bauelement ausgebildet ist, das an einer Leiterplatte der Vorrichtung angeordnet ist, wobei der zumindest eine Flussleiter eine Lasche aufweist, die in gegenseitiger Überlappung mit dem Magnetsensor angeordnet ist.

Drehmomentsensoreinrichtungen sind dabei dazu vorgesehen, ein auf eine Welle aufgebrachtes Drehmoment zu erfassen, in Kraftfahrzeugen insbesondere um ein vom Fahrer auf eine Lenkwelle aufgebrachtes Lenkmoment zu erfassen. Solche Drehmomentsensoreinrichtungen werden beispielsweise bei elektrischen Lenksystemen eingesetzt, um den elektrischen Antriebsmotor des Lenksystems basierend auf dem von einem Fahrer aufgebrachten Lenkmoment anzusteuern, beispielsweise um eine entsprechende Lenkunterstützung bereitzustellen.

In der Regel werden dazu Drehmomentsensoreinrichtungen mit einem Torsionsstab mit definierter, bekannter Torsionssteifigkeit eingesetzt, wobei der Torsionsstab dabei einen ersten Teil einer axial geteilten Welle mit einem zweiten Teil der axial geteilten Welle verbindet.

Wird ein Drehmoment auf die Welle aufgebracht, bewirkt dies eine Verdrehung der beiden Teile der Welle zueinander um einen messbaren Verdrehwinkel, wobei der Verdrehwinkel sich abhängig vom aufgebrachten Drehmoment und der Steifigkeit des Torsionsstabes einstellt, so dass aus dem erfassten Verdrehwinkel bei definierter, bekannter Steifigkeit des Torsionsstabes das aufgebrachte Drehmoment ermittelt werden kann.

Zur Messung des infolge eines aufgebrachten Drehmoments resultierenden Verdrehwinkels sind verschiedene Messprinzipien und Sensoranordnungen bekannt, wobei sehr häufig magnetische Sensorsysteme zum Einsatz kommen, bei denen ein umlaufender, meistens als Permanentmagnet ausgebildeter Ringmagnet mit dem ersten Teil der Lenkwelle drehfest verbunden ist und bei denen ein Halter mit einem magnetisch leitfähigen Stator drehfest mit dem zweiten Teil der Welle verbunden ist, wobei der Stator in radialer Richtung mit einem kleinen Luftspalt konzentrisch um den Ringmagneten herum angeordnet ist. Über den Stator, welcher üblicherweise aus zwei separaten Statorteilen mit jeweils einem ringscheibenförmigen Bereich besteht, kann der magnetische Fluss des Ringmagneten zu einem Drehmoment-Magnetsensor, beispielsweise einem Hall-Sensor, geleitet werden und ausgewertet werden.

Wird der drehfest mit dem ersten Teil der Welle verbundene Ringmagnet durch eine Rotationsbewegung der Welle relativ zum mit dem zweiten Teil der Welle verbundenen Stator bewegt, ändert sich die magnetische Flussdichte im Stator, was mittels des Drehmoment-Magnetsensors erfasst werden kann. Die Änderung der magnetischen Flussdichte im Stator ist dabei unter anderem abhängig von der Größe der Relativbewegung des Ringmagneten gegenüber dem Stator, d.h. vom Verdrehwinkel. Somit kann aus der Änderung der erfassten Flussdichte auf den Verdrehwinkel geschlossen werden und aus dem Verdrehwinkel wiederum kann mit Kenntnis der Torsionssteifigkeit des Torsionsstabs das auf die Welle aufgebrachte Drehmoment ermittelt werden.

Weist die Sensorvorrichtung, wie die in der vorgenannten DE 10 2013 006 379 A1 beschriebene Sensorvorrichtung, zusätzlich zur Inkrementalsensoreinrichtung eine Drehmomentsensoreinrichtung auf, kann es, insbesondere wenn sowohl eine definierte, diskrete Drehwinkelposition der Lenkwelle als auch ein auf die Lenkwelle aufgebrachtes Drehmoment magnetisch erfasst werden, insbesondere wenn der Permanentmagnet der Inkrementalsensoreinrichtung bei jeder Lenkwellenumdrehung am Drehmoment-Magnetsensor vorbeigeführt wird, zu einer unerwünschten Kopplung des Magnetfelds der Inkrementalsensoreinrichtung mit dem Drehmoment-Magnetsensor der Drehmomentsensoreinrichtung kommen, insbesondere zu einem sogenannten "Übersprechen" aufgrund eines magnetischen Streufeldes des Permanentmagneten der Inkrementalsensoreinrichtung.

Aufgabe der Erfindung ist es, eine alternative Sensorvorrichtung mit einer Inkrementalsensoreinrichtung bereitzustellen, insbesondere eine alternative Sensorvorrichtung mit einer Inkrementalsensoreinrichtung, die eine verbesserte Entkopplung der Inkrementalsensoreinrichtung von der Drehmomentsensoreinrichtung ermöglicht.

Diese Aufgabe wird durch eine erfindungsgemäße Sensorvorrichtung sowie durch ein erfindungsgemäßes Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche der Beschreibung und der Figuren und werden im Folgenden näher erläutert.

Die Erfindung betrifft eine Sensorvorrichtung mit einer Inkrementalsensoreinrichtung für eine um eine Drehachse drehbare Welle, insbesondere für eine Lenkwelle eines Kraftfahrzeugs. Die Inkrementalsensoreinrichtung ist dabei zur Erfassung wenigstens einer definierten Drehwinkelposition der Welle ausgebildet und weist ein Sendeelement und ein gehäusefest angeordnetes Empfangselement auf, wobei ein vom Sendeelement ausgesendetes und entlang eines Signalweges übertragenes Signal vom Empfangselement empfangen werden kann. Anhand des vom Empfangselement empfangenen Signals ist erkennbar, ob sich die Welle in der definierten Drehwinkelposition befindet oder nicht, wobei die Inkrementalsensoreinrichtung dazu ausgebildet ist, bei Erreichen der definierten Drehwinkelposition der Welle ein Signalimpuls zu erzeugen.

Erfindungsgemäß ist das Sendeelement der Inkrementalsensoreinrichtung dabei ebenfalls, wie das Empfangselement der Inkrementalsensoreinrichtung, gehäusefest angeordnet, d.h. es findet keine Relativbewegung zwischen dem Sendeelement und dem Empfangselement der Inkrementalsensoreinrichtung statt. Durch eine Rotationsbewegung der Welle ist jedoch eine Änderung des vom Empfangselement empfangenen Signals bewirkbar.

Die erfindungsgemäße, gehäusefeste Anordnung des Sendelements der Inkrementalsensoreinrichtung ist insbesondere für Sensorvorrichtungen vorteilhaft, die zusätzlich noch eine Drehmomentsensoreinrichtung aufweisen, insbesondere eine Drehmomentsensoreinrichtung mit einem Drehmoment-Magnetsensor, denn durch die ebenfalls gehäusefeste und damit ortsfeste Anordnung des Sendeelements der Inkrementalsensoreinrichtung im Gehäuse kann vermieden werden, dass das Sendeelement der Inkrementalsensoreinrichtung bei jeder Umdrehung am Drehmoment-Magnetsensor der Drehmomentsensoreinrichtung vorbeigeführt wird. Somit können negative Kopplungseffekte zwischen dem Sendeelement und dem Drehmoment-Magnetsensor reduziert werden. Insbesondere können unerwünschte Wechselwirkungen zwischen der Drehmomentsensoreinrichtung und der Inkrementalsensoreinrichtung und auftretende Störeinflüsse minimiert werden.

Im Sinne der Erfindung bedeutet gehäusefest stationär bzw. ortsfest im Gehäuse angeordnet.

Um erfindungsgemäß das vom Sendeelement an das Empfangselement übertragene Signal in Abhängigkeit von der Drehwinkelposition der Welle zu beeinflussen, so dass durch eine Rotationsbewegung der Welle eine Änderung des vom Empfangselement empfangenen Signals bewirkt werden kann, weist die Inkrementalsensoreinrichtung erfindungsgemäß ein mit der Welle drehfest koppelbares, sich in radialer Richtung nach außen erstreckendes, vorzugsweise wie eine Blende wirkendes Abschirmelement auf.

In einer vorteilhaften Ausgestaltung sind das Sendeelement und das Empfangselement voneinander beabstandet angeordnet, vorzugsweise in axialer Richtung voneinander beabstandet, wobei das Sendeelement und das Empfangselement insbesondere in parallelen Ebenen angeordnet sind. Das Abschirmelement ist dabei vorzugsweise derart ausgebildet und derart mit der Welle koppelbar, dass es durch eine Rotationsbewegung der Welle zwischen den Ebenen, in denen jeweils das Sendeelement und das Empfangselement angeordnet sind, in Umfangsrichtung bewegbar ist, wobei das Abschirmelement insbesondere zwischen dem Sendeelement und dem Empfangselement hindurch bewegt werden kann.

D.h. in einer besonders vorteilhaften Ausgestaltung einer erfindungsgemäßen Sensorvorrichtung ist das Abschirmelement der Inkrementalsensoreinrichtung derart ausgebildet und derart mit der Welle koppelbar, dass es durch eine Rotationsbewegung der Welle relativ zu dem ortsfest angeordneten Sendeelement und relativ zu dem ortsfest angeordneten Empfangselement bewegbar ist, insbesondere zwischen dem Sendeelement und dem Empfangselement hindurch.

Besonders bevorzugt ist das Abschirmelement dabei derart angeordnet, dass es bei einer Drehung der Welle eine ringförmige Bahn in Umfangsrichtung beschreibt, die an dem ortsfesten Empfangselement vorbeiführt, vorzugsweise auch am ortsfest angeordneten Sendeelement.

Bei einer Sensorvorrichtung, die zusätzlich zur Inkrementalsensoreinrichtung noch eine Drehmomentsensoreinrichtung aufweist, insbesondere eine Drehmomentsensoreinrichtung mit einem Drehmoment-Magnetsensor, wird dabei zwar auch das Abschirmelement bei jeder Umdrehung der Welle am Drehmoment-Magnetsensor vorbeigeführt. Der vom Abschirmelement ausgehende Störeinfluss auf die Drehmomentsensoreinrichtung ist jedoch deutlich geringer gegenüber als ein von einem Permanentmagneten ausgehender Störeinfluss, der bei jeder Umdrehung der Welle am Drehmoment-Magnetsensor vorbeigeführt wird.

Bei der ersten erfindungsgemäßen Sensorvorrichtung erstreckt sich das Abschirmelement bei Erreichen der definierten Drehwinkelposition der Welle in den Signalweg zwischen dem Sendeelement der Inkrementalsensoreinrichtung und dem Empfangselement der Inkrementalsensoreinrichtung hinein und unterbricht den Signalweg, vorzugsweise den kürzesten Signalweg, zwischen dem Sendeelement und dem Empfangselement, oder schwächt das Signal stark ab, wobei das Abschirmelement dazu an einer, der definierten Drehwinkelposition zugeordneten Position in Umfangsrichtung mit der Welle koppelbar ist. Die Unterbrechung des Signalweges bzw. eine starke Abschwächung des Signals bei Erreichen der definierten Drehwinkelposition kann insbesondere mittels eines als schmaler Flügel ausgebildeten Abschirmelementes erreicht werden.

Durch das Unterbrechen des Signalweges und/oder durch ein starkes Abschwächen des Signals beim Passieren des Empfangselements mit dem Abschirmelement, und damit durch die Unterbrechung bzw. Abschwächung eines Signalflusses vom Sendeelement zum Empfangselement, kann ein Signalimpuls erzeugt werden, welcher von einer Steuerungseinrichtung ausgewertet bzw. weiterverarbeitet werden kann.

Im Sinne der Erfindung wird dabei unter einem Signalimpuls eine impulsartige Änderung des vom Empfangselement empfangenen Signals verstanden, wobei die impulsartige Än derung vorzugsweise sowohl durch eine Unterbrechung des Signalwegs hervorgerufen werden kann als auch durch die Beendigung einer Unterbrechung des Signalwegs. Eine impulsartige Änderung des vom Empfangselement empfangenen Signals kann aber auch durch eine plötzliche starke Abschwächung oder eine plötzliche Zunahme des Signals hervorgerufen werden.

Bei der zweiten erfindungsgemäßen Ausgestaltung kann das Abschirmelement der erfindungsgemäßen Sensorvorrichtung sich auch außerhalb der definierten Drehwinkelposition der Welle in den Signalweg zwischen dem Sendeelement der Inkrementalsensoreinrichtung und dem Empfangselement der Inkrementalsensoreinrichtung hinein erstrecken, und unterbricht außerhalb der definierten Drehwinkelposition der Welle den Signalweg, vorzugsweise den kürzesten Signalweg, zwischen dem Sendeelement und dem Empfangselement, bzw. schwächt außerhalb der definierten Drehwinkelposition der Welle das Signal stark ab, wobei das Abschirmelement dazu an einer, der definierten Drehwinkelposition zugeordneten Position in Umfangsrichtung mit der Welle koppelbar ist. Die Unterbrechung des Signalweges außerhalb der definierten Drehwinkelposition bzw. eine starke Abschwächung des Signals außerhalb der definierten Drehwinkelposition kann insbesondere mittels eines als geöffnete Ringscheibe ausgebildeten Abschirmelementes erreicht werden.

In einer vorteilhaften Ausgestaltung ist das Abschirmelement somit ein scheibenförmig ausgebildetes Segment, insbesondere ein ringscheibenförmiges Segment, wobei das Abschirmelement vorzugsweise ein an einer vorbestimmten Drehwinkelposition mit der Welle koppelbarer Flügel ist oder eine in Umfangsrichtung geöffnete Ringscheibe mit einer der definierten Drehwinkelposition zugeordneten Position der Öffnung der Ringscheibe in Umfangsrichtung.

In einer besonders vorteilhaften Ausgestaltung ist das Sendeelement ein Magnet, vorzugsweise ein Permanentmagnet, und das Empfangselement ein Magnetsensor, insbesondere ein Hall-Sensor, wobei das Abschirmelement in diesem Fall vorzugsweise ferromagnetisch ausgebildet ist, um das vom Empfangselement empfangene Signal erfindungsgemäß beeinflussen zu können.

In einer vorteilhaften Ausgestaltung ist der Magnetsensor der Inkrementalsensoreinrichtung in axialer Richtung unempfindlich ausgebildet ist und in tangentialer und/oder radialer Richtung sensitiv. Dadurch kann eine störende Kopplung des Magnetsensors der Inkrementalsensoreinrichtung mit einem sich in axialer Richtung zwischen ringscheibenförmigen Bereichen magnetisch leitfähiger Statorteile einer Drehmomentsensoreinrichtung einstellenden Magnetfeld reduziert bzw. nahezu vollständig vermieden werden.

In einer vorteilhaften Ausgestaltung ist der das Sendeelement der Inkrementalsensoreinrichtung bildende Magnet zweipolig ausgebildet, wobei der Magnet vorzugsweise scheibenförmig ausgebildet ist und insbesondere je einen benachbarten Nordpol und Südpol aufweist. Der Magnet kann aber auch rundgeformt ausgebildet sein, beispielsweise zylinder- oder kugelförmig.

In einer besonders vorteilhaften Ausgestaltung ist eine die Pole des Magneten der Inkrementalsensoreinrichtung trennende Trennebene in radialer Richtung orientiert, so dass sich die Feldlinien des Magneten der Inkrementalsensoreinrichtung in einer planaren, senkrecht zur Drehachse der Welle orientierten Ebene ausrichten.

In einer alternativen Ausgestaltung ist die Trennebene zur Poltrennung der Pole des Magneten der Inkrementalsensoreinrichtung in einem Winkel zur radialen Richtung orientiert, aber parallel zur Drehachse der Welle. Dadurch kann bei entsprechender Ausgestaltung des Abschirmelementes erreicht werden, dass eine dem Sendeelement der Inkrementalsensoreinrichtung zugewandte Kante des Abschirmelementes unter einem Winkel zur Feldrichtung des vom Sendeelement erzeugten Magnetfeldes orientiert ist, so dass sich beim Annähern des Abschirmelementes an das Magnetfeld, insbesondere beim Annähern der Kante des Abschirmelementes an das Magnetfeld, die Feldlinien drehen. Beim Hindurchbewegen des Abschirmelementes zwischen dem Sendeelement und dem Empfangselement wird dann nicht nur die Feldstärke zwischen Sendeelement und Empfangselement beeinflusst bzw. moduliert, sondern auch die Feldrichtung. Um diesen Vorteil nutzen zu können, sollte das Empfangselement ein magnetischer Sensor sein, welcher in der planaren, senkrecht zur Drehachse der Welle orientierten Ebene, in der sich die Feldlinien ausrichten, auch die Feldrichtung des Magnetfeldes detektieren kann.

In einer alternativen Ausgestaltung ist das Sendeelement eine Lichtquelle und das Empfangselement ein Lichtsensor, wobei das Abschirmelement dabei opak ausgebildet ist und mittels des Abschirmelementes Abschattung des Lichtsensors bewirkbar ist.

Das Sendeelement und das Empfangselement können in einer alternativen Ausgestaltung aber auch jeweils durch wenigstens eine induktive Spule gebildet sein, wobei das Abschirmelement in diesem Fall metallisch ausgebildet sein sollte, um eine induktive Kopplung des Sendeelements mit dem Empfangselement beeinflussen zu können.

In einer besonders vorteilhaften Ausgestaltung weist die Sensorvorrichtung zusätzlich eine Drehmomentsensoreinrichtung auf, wobei die Drehmomentsensoreinrichtung zur Erfassung eines auf die Welle aufgebrachten Drehmoments ausgebildet ist, vorzugsweise zur Erfassung eines auf eine Welle, die einen ersten Teil und einen zweiten, relativ zum ersten Teil verdrehbaren Teil aufweist, aufgebrachten Drehmoments, wobei insbesondere der erste und der zweite Teil der Welle mittels eines Torsionsstabs miteinander verbunden sind.

Bevorzugt weist die Sensoreinrichtung dazu einen drehfest mit dem ersten Teil der Welle verbindbaren Ringmagneten, einen gehäusefest angeordneten Drehmoment-Magnetsensor und einen, mit dem zweiten Teil der Welle drehfest verbindbaren Stator zum Leiten eines magnetischen Flusses vom Ringmagneten zum Drehmoment-Magnetsensor auf.

In einer vorteilhaften Ausgestaltung ist das Abschirmelement der Inkrementalsensoreinrichtung dabei drehfest mit dem Stator der Drehmomentsensoreinrichtung verbunden, wobei das Abschirmelement vorzugsweise am Stator befestigt ist, insbesondere an einem Statorhalter.

Ein erfindungsgemäßes Kraftfahrzeug mit einer Lenkwelle und einer Sensorvorrichtung zur Erfassung wenigstens einer definierten Drehwinkelposition der Welle, ist dadurch gekennzeichnet, dass es eine vorbeschriebene, erfindungsgemäße Sensorvorrichtung aufweist.

Die mit Bezug auf die Sensorvorrichtung vorgestellten, vorteilhaften Ausgestaltungen und deren Vorteile gelten dabei nicht nur für die Sensorvorrichtung, sondern auch entsprechend für ein erfindungsgemäßes Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Manche der gerannten Merkmale bzw. Eigenschaften betreffen sowohl eine erfindungsgemäße Sensorvorrichtung als auch ein erfindungsgemäßes Kraftfahrzeug. Einige dieser Merkmale und Eigenschaften werden teilweise nur einmal beschrieben, gelten jedoch unabhängig voneinander im Rahmen technisch möglicher Ausgestaltungen sowohl für eine erfindungsgemäße Sensorvorrichtung als auch für ein erfindungsgemäßes Kraftfahrzeug.

Die Erfindung wird nun anhand mehrerer, bevorzugter Ausführungsbeispiele unter Bezugnahme auf die beigefügten Zeichnungen näher erläutert.

Es zeigen:
- Fig. 1: in Explosionsdarstellung Teilkomponenten einer erfindungsgemäßen Sensorvorrichtung gemäß einer ersten Ausführungsform der Erfindung,
- Fig. 2: einen Viertelschnitt durch die erfindungsgemäße Sensorvorrichtung aus Fig. 1 im Bereich des Drehmoment-Magnetsensors in einer Schnittebene parallel zur Drehachse der Welle,
- Fig. 3a: in vergrößerter Darstellung einen Ausschnitt der erfindungsgemäßen Sensorvorrichtung aus den Fig. 1 und 2 im Schnitt entlang einer senkrecht zur Drehachse der Welle verlaufenden Schnittebene mit Draufsicht auf die Inkrementalsensoreinrichtung aus Fig. 3b,
- Fig. 3b: einen Viertelschnitt durch die erfindungsgemäße Sensorvorrichtung aus den vorangegangen Figuren in einer Schnittebene parallel zur Drehachse der Welle, jedoch im Bereich des Sendeelements und des Empfangselements der Inkrementalsensoreinrichtung,
- Fig. 4: die Inkrementalsensoreinrichtung der erfindungsgemäßen Sensorvorrichtung aus den vorangegangenen Figuren in schematischer, perspektivischer Darstellung mit einem am Statorhalter befestigten Abschirmelement und der erfindungsgemäßen, gehäusefesten Anordnung von Sendeelement und Empfangselement,
- Fig. 5: den Signalverlauf eines vom Empfangselement der Inkrementalsensoreinrichtung aus Fig. 4 empfangenen Signals in Abhängigkeit von der Drehwinkelposition der Welle bei einem gemäß Fig. 4 ausgestalteten Abschirmelement,
- Fig. 6: ein alternatives Ausführungsbeispiel einer Inkrementalsensoreinrichtung einer erfindungsgemäßen Sensorvorrichtung, ebenfalls in schematischer, perspektivischer Darstellung mit einem am Statorhalter befestigten Abschirmelement und der erfindungsgemäßen, gehäusefesten Anordnung von Sendeelement und Empfangselement,
- Fig. 7: den Signalverlauf eines vom Empfangselement der Inkrementalsensoreinrichtung aus Fig. 6 empfangenen Signals in Abhängigkeit von der Drehwinkelposition der Welle bei einem gemäß Fig. 6 ausgestalteten Abschirmelement,
- Fig. 8: ein weiteres, alternatives Ausführungsbeispiel einer Inkrementalsensoreinrichtung einer erfindungsgemäßen Sensorvorrichtung, ebenfalls in schematischer, perspektivischer Darstellung mit einem am Statorhalter befestigten Abschirmelement und der erfindungsgemäßen, gehäusefesten Anordnung von Sendeelement und Empfangselement.

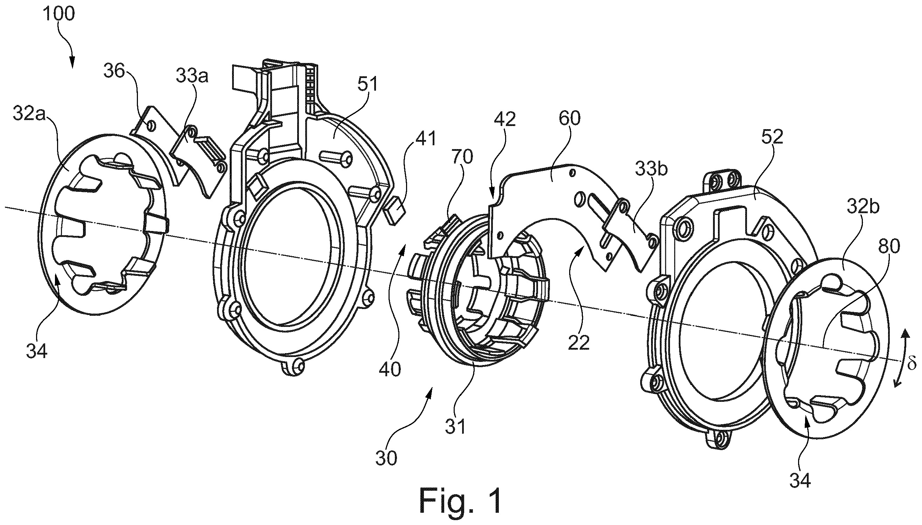

In Fig. 1 sind in Explosionsdarstellung die Teilkomponenten einer erfindungsgemäßen Sensorvorrichtung 100 mit einer in Fig. 1 nicht näher bezeichneten Drehmomentsensoreinrichtung und einer Inkrementalsensoreinrichtung 40 dargestellt, wobei die Sensoreinrichtung 100 speziell für eine Lenkwelle eines Kraftfahrzeugs konzipiert ist.

Die erfindungsgemäße Sensorvorrichtung 100 ist dabei zur Anordnung auf einer hier nicht dargestellten, um eine Drehachse 80 drehbaren Lenkwelle ausgebildet, welchen einen ersten Teil und einen zweiten Teil aufweist, wobei der erste Teil und der zweite Teil der Lenkwelle über einen ebenfalls nicht dargestellten Torsionsstab in axialer Richtung miteinander verbunden sind.

Die Drehmomentsensoreinrichtung der erfindungsgemäßen Sensorvorrichtung 100 weist dabei zur Erfassung eines auf die Lenkwelle aufgebrachten Drehmomentes einen ebenfalls nicht dargestellten, mit dem ersten Teil der Lenkwelle drehfest verbindbaren Permanent-Ringmagneten auf, einen gehäusefest angeordneten Drehmoment-Magnetsensor 22 sowie einen, mit dem zweiten Teil der Lenkwelle drehfest verbindbaren Stator 30 zum Leiten eines magnetischen Flusses vom Ringmagneten zum Drehmoment-Magnetsensor 22.

Der Drehmoment-Magnetsensor 22, der durch einen Hall-Sensor 22 gebildet wird, ist dabei auf einer Seite einer ringscheibensegmentförmigen Leiterplatte 60 angeordnet, welche stationär an einem Gehäuse befestigt ist, wobei das Gehäuse bei dieser erfindungsgemäßen Sensorvorrichtung 100 durch die beiden Gehäuseteile 51 und 52 gebildet wird. Die Leiterplatte 60, auf welcher der Drehmoment-Magnetsensor 22 angeordnet ist, ist dabei in radialer Richtung außerhalb der Lenkwelle angeordnet, wobei die Leiterplattenebene senkrecht zur Drehachse 80 orientiert ist.

Der Stator 30, welcher bei diesem Ausführungsbeispiel durch einen aus Kunststoff ausgebildeten Statorhalter 31 sowie zwei magnetisch leitende Statorteile 32a und 32b gebildet wird, und der zum Leiten des vom Ringmagneten erzeugten magnetischen Flusses zum Drehmoment-Magnetsensor 22 auf der Leiterplatte 60 vorgesehen ist, kann mit dem zweiten Teil der Lenkwelle drehfest verbunden werden und ist im Gehäuse der Sensorvorrichtung 100 gleitend gelagert, so dass der Stator 30 einer Rotationsbewegung der Lenkwelle folgen kann und sich relativ zum Gehäuse und dem über die Leiterplatte 60 am Gehäuse stationär befestigten Drehmoment-Magnetsensor 22 bewegen kann.

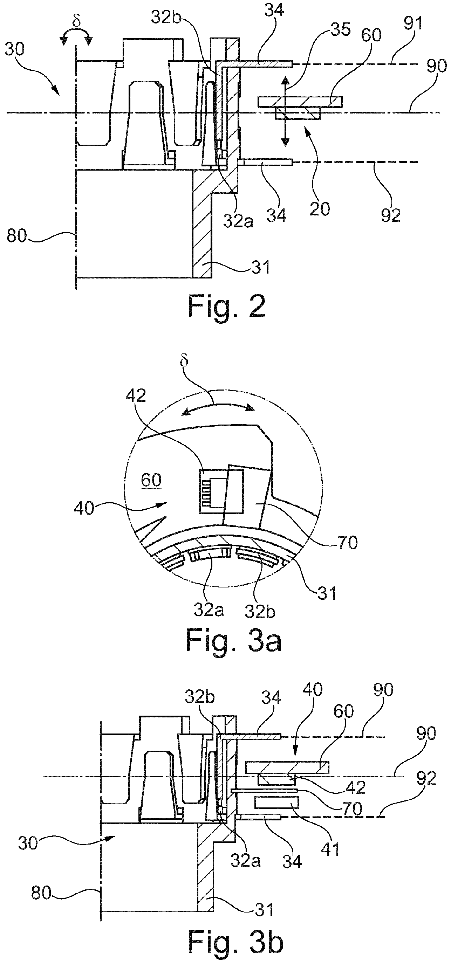

Die beiden Statorteile 32a und 32b sind insbesondere weichmagnetisch ausgebildet und weisen jeweils einen senkrecht zur Drehachse 80 der Lenkwelle orientierten und sich in radialer Richtung nach außen erstreckenden ringscheibenförmig ausgebildeten Bereich 34 auf. Die beiden Statorteile 32a und 32b sind dabei vom Statorhalter 31 derart aufgenommen, dass die ringscheibenförmig ausgebildeten Bereiche 34 jeweils in axialer Richtung voneinander beabstandet in parallelen Ebenen 91, 92 und mit einem Luftspalt konzentrisch zum Ringmagneten angeordnet sind, siehe Fig. 2.

Da die Statorteile 32a und 32b magnetisch leitend ausgebildet sind, stellt sich aufgrund des Magnetfeldes des Ringmagneten ein magnetischer Fluss in den Statorteilen 32a und 32b ein. Dadurch bildet sich unter anderem zwischen den beiden ringscheibenförmigen Bereichen 34 der Statorteile 32a und 32b ein axial ausgerichtetes Magnetfeld 35 aus, das in Fig. 2 durch den mit dem Bezugszeichen 35 bezeichneten Pfeil symbolisch angedeutet ist.

Ist der auf der Leiterplatte 60 befestigte Drehmoment-Sensor 22, wie bei dem in Fig. 2 gezeigten Ausführungsbeispiel einer erfindungsgemäßen Sensorvorrichtung 100, in axialer Richtung zwischen den ringscheibenförmig ausgebildeten Bereichen 34 der Statorteile 32a und 32b angeordnet, kann der vom Ringmagneten in den Statorteilen 32a und 32b erzeugte magnetische Fluss erfasst werden.

Zur Verstärkung der Flussdichte im Bereich des Drehmoment-Magnetsensors 22 und damit zur Verbesserung der Auflösung der Drehmomentsensoreinrichtung 20 sind bei der beschriebenen Sensorvorrichtung 100 im Bereich des Drehmoment-Magnetsensors 22 zusätzlich noch zwei scheibensegmentförmige Flussleiter 33a und 33b vorgesehen, welche über entsprechende Halter 36, ebenfalls in axialer Richtung beabstandet zu einander, in jeweils parallelen, senkrecht zur Drehachse 80 verlaufenden Ebenen orientiert, stationär am Gehäuse befestigt sind, siehe Fig. 1.

Bei der Sensorvorrichtung 100 ist die Leiterplatte 60 mit dem darauf befestigten Drehmoment-Magnetsensor 22 derart zwischen den ringscheibenförmig ausgebildeten Bereichen 34 der Statorteile 32a und 32b angeordnet, dass sich der Drehmoment-Magnetsensor 22 in axialer Richtung genau in der Mitte, d.h. in einer radialen Mittelebene 90, zwischen den ringscheibenförmig ausgebildeten Bereichen 34 der Statorteile 32a und 32b befindet.

Wird die Lenkwelle durch ein auf die Lenkwelle aufgebrachtes Drehmoment tordiert und der erste Teil der Lenkwelle relativ zum zweiten Teil der Lenkwelle verdreht, wird dadurch eine Relativbewegung des Ringmagneten gegenüber dem Stator 30 erzeugt, wodurch sich die magnetische Flussdichte in den beiden Statorteilen 32a und 32b ändert, insbesondere in den ringscheibenförmigen Bereichen 34, was vom Drehmoment-Magnetsensor 22 erfasst werden kann. Aus der erfassten Flussdichte bzw. der erfassten Flussdichte-Änderung kann auf relative Position des Ringmagneten zum Stator 30 geschlossen werden, d.h. auf den Verdrehwinkel. Mit Kenntnis der Steifigkeit des Torsionsstabes lässt sich daraus das auf die Lenkwelle aufgebrachte Drehmoment ermitteln.

Mit der Inkrementalsensoreinrichtung 40 der erfindungsgemäßen Sensorvorrichtung 100 kann eine diskrete, definierte Drehwinkelposition δ_{def} der Lenkwelle erfasst werden, wobei in diesem Fall die definierte Drehwinkelposition δ_{def} einen Nulldurchgang definiert, d.h. jeweils ein Drehwinkel von δ=0°bezogen auf eine Umdrehung, so dass mit der Inkrementalsensoreinrichtung die Anzahl der Umdrehungen der Lenkwelle ermittelt werden kann. In Kenntnis der Anzahl der Umdrehungen der Lenkwelle kann ein anderes, absolutes, vorzugsweise analoges bzw. kontinuierliches, Lenkwinkelsignal plausibilisiert werden. Insbesondere kann anhand des digitalen Signals der Inkrementalsensoreinrichtung grob festgestellt werden, in welchem Winkelbereich der absolute Lenkwinkelbereich liegen soll, so dass eine Überprüfung des gemessenen absoluten Winkels möglich ist, beispielsweise ob ein absoluter Lenkwinkel von 40°oder 400°vorliegt.

Dazu weist die Inkrementalsensoreinrichtung 40 einen gehäusefest auf der Leiterplatte 60 angeordneten, magnetischen Hall-Sensor 42 auf, welcher im Folgenden als Empfangselement 42 bezeichnet wird, sowie ein zugehöriges Sendeelement 41 in Form eines scheibenförmig ausgebildeten, 2-poligen Permanentmagneten 41.

Das Sendeelement 41 ist erfindungsgemäß gehäusefest am, durch die Gehäuseteile 51 und 52 gebildeten Gehäuse der Sensorvorrichtung 100 angeordnet, wobei durch eine Rotationsbewegung der Lenkwelle eine Änderung des vom Empfangselement 42 empfangenen Signals bewirkbar ist, so dass erkannt werden kann, ob sich die Lenkwelle in der vorbestimmten Drehwinkelposition δ_{def} befindet oder nicht.

Das Empfangselement 42 ist bei diesem Ausführungsbeispiel einer erfindungsgemäßen Sensoreinrichtung 100 dabei auf der gleichen Seite der Leiterplatte 60 angeordnet, wie der Drehmoment-Magnetsensor 22, jedoch in Umfangsrichtung versetzt zu diesem, vgl. Fig. 2 und Fig. 3b, wobei Fig. 2 einen Viertelschnitt durch die erfindungsgemäße Sensorvorrichtung 100 aus Fig. 1 im Bereich des Drehmoment-Magnetsensors 22 in einer Schnittebene parallel zur Drehachse 80 der Welle zeigt, während Fig. 3b den entsprechenden Schnitt im Bereich des Sendelements und des Empfangselements der Inkrementalsensoreinrichtung zeigt. Selbstverständlich können das Empfangselement 42 und der Drehmoment-Magnetsensor 22 aber auch auf unterschiedlichen Seiten der Leiterplatte 60 angeordnet sein.

Um Störeinflüsse durch das sich zwischen den ringscheibenförmigen Bereichen 34 der Statorteile 32a und 32b einstellende, axial ausgerichtete Magnetfeld 35 auf das Empfangselement 42, das ebenfalls durch einen Hall-Sensor 42 gebildet ist, zu minimieren, ist das Empfangselement 42 bzw. der Hall-Sensor 42 bei diesem Ausführungsbeispiel in vorteilhafter Weise in axialer Richtung unempfindlich ausgebildet und lediglich in der planaren, senkrecht zur Drehachse 80 orientierten Ebene 90 empfindlich bzw. sensitiv ausgebildet. D.h. eine Änderung des vom Sendeelement 41 erzeugten Magnetfeldes kann vom Empfangselement 42 nur in einer zu den ringscheibenförmigen Bereichen 34 parallelen Ebene 90 der Statorteile 32a und 32b bzw. in der planaren Mittelebene 90 parallel zur Leiterplatte 60 detektiert werden.

Um mit dem Empfangselement 42 ein entsprechendes Signal detektieren zu können, ist das Sendeelement 41 bzw. der das Sendeelement bildende Permanentmagnet 41 dementsprechend dazu ausgebildet, ein in der planaren Ebene 90 des Empfangselementes 42 wirkendes Magnetfeld zu erzeugen. D.h. der Permanentmagnet 41 muss derart ausgebildet sein, dass sich ein entsprechend orientiertes Magnetfeld einstellt.

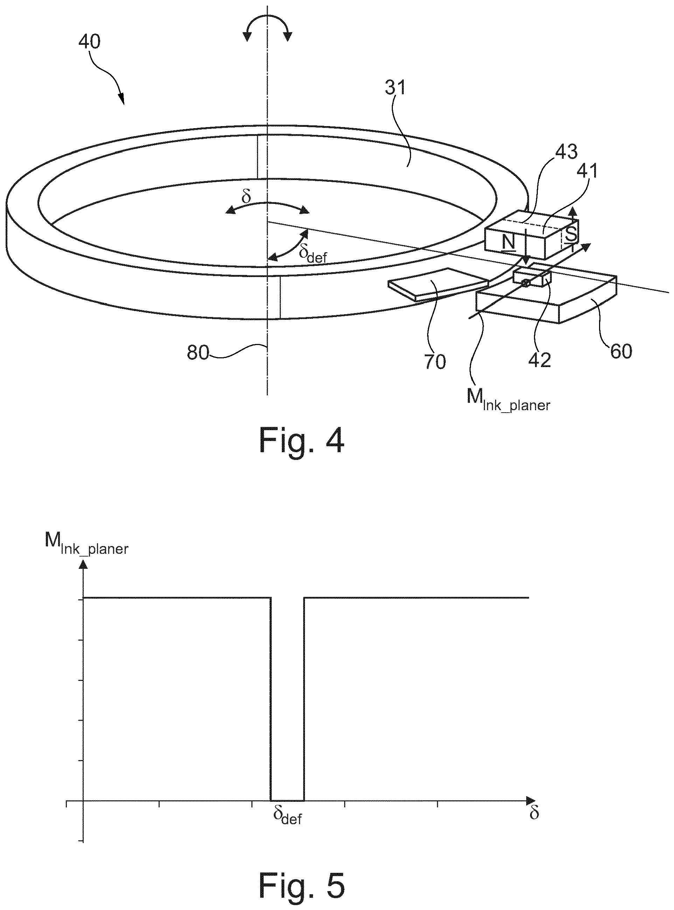

Als besonders vorteilhaft hat sich dabei, wie anhand von Fig. 4 schematisch dargestellt ist, ein Sendeelement 41 in Form eines 2-poligen, scheibenförmigen Permanentmagneten 41 erwiesen, mit einem benachbart zu einem Südpol S angeordneten Nordpol N, wobei die Pole N, S derart orientiert sind, dass sich die vom Nordpol N zum Südpol S verlaufenden Feldlinien des magnetischen Feldes zumindest teilweise derart ausrichten, dass sie tangential und/oder radial zur Lenkwelle in der planaren Ebene 90 verlaufen und als Signal M_{Ink_planar} vom Empfangselement 42 empfangen werden können. Dazu ist wie bei dem in Fig. 4 gezeigten Beispiel erkennbar, eine Trennebene 43 des Permanentmagneten 41, welche den Nordpol N vom Südpol S trennt, bevorzugt in radialer Richtung orientiert.

Das Sendeelement 41 und das Empfangselement 42 sind bei der in Fig. 4 gezeigten Inkrementalsensoreinrichtung 40 der erfindungsgemäßen Sensoreinrichtung 100 in axialer Richtung in parallelen Ebenen zueinander beabstandet angeordnet, wobei das Sendeelement 41 auf der gleichen Seite der Leiterplatte 60 wie das Empfangselement 42 gegenüber vom Empfangselement 42 angeordnet ist. Ein vom Sendeelement 41 ausgesendetes und entlang eines Signalweges übertragenes Signal kann somit vom Empfangselement 42 empfangen werden. Anhand des vom Empfangselement 42 empfangenen Signals ist erkennbar, ob sich die Lenkwelle in der definierten Drehwinkelposition δ_{def} befindet oder nicht. Dabei ist die Inkrementalsensoreinrichtung 40 dazu ausgebildet, bei Erreichen der definierten Drehwinkelposition δ_{def} durch die Lenkwelle, einen Signalimpuls zu erzeugen.

Um durch eine Rotationsbewegung der Lenkwelle eine Änderung des vom Empfangselement 42 empfangenen Signals zu bewirken, weist die Inkrementalsensoreinrichtung 40 ein drehfest am Statorhalter 31 befestigtes, ferromagnetisches Abschirmelement 70 auf, welches bei dem in Fig. 1 gezeigten Ausführungsbeispiel einer erfindungsgemäßen Sensorvorrichtung 100 durch ein sich in radialer Richtung nach außen erstreckendes, scheibenförmiges, ferromagnetisches Blech 70 in Form eines Flügels gebildet wird. Das Abschirmelement 70 ist dabei derart ausgebildet und am Statorhalter 31 angeordnet, dass es bei einer Rotation der Lenkwelle zwischen den Ebenen, in denen jeweils das Sendeelement 41 und das Empfangselement 42 angeordnet sind, in Umfangsrichtung bewegt werden kann, insbesondere zwischen dem Sendeelement 41 und dem Empfangselement 42 hindurch.

Wird infolge einer Rotationsbewegung der Lenkwelle das ferromagnetische Abschirmelement 70 zwischen das Sendeelement 41 und das Empfangselement 42 bewegt, werden die magnetischen Feldlinien aufgrund der ferromagnetischen Eigenschaften des Abschirmelementes 70 von diesem "aufgesammelt" und dadurch das Empfangselement 42 abgeschattet, so dass die vom Empfangselement 42 erfasste Magnetfeldstärke der planaren Feldkomponente und damit das vom Empfangselement 42 empfangene Signal M_{Ink_planar} stark abfällt.

In Fig. 5 ist der zugehörige Signalverlauf des vom Empfangselement 42 empfangenen Signals M_{Ink_planar} über der Drehwinkelposition δ dargestellt, wobei bei Erreichen der vorbestimmten, definierten Drehwinkelposition δ_{def} infolge der Abschattung des Empfangselementes 42 durch das Abschirmelement 70 ein entsprechender Signalimpuls erzeugt wird. Ist das Abschirmelement 70 dabei, wie bei dieser Inkrementalsensoreinrichtung 40, durch einen schmalen Flügel gebildet, vgl. Fig. 3a und 3b, wird der Signalimpuls durch eine Unterbrechung des Signals M_{Ink_planar} erzeugt. Um den Signalimpuls bei Erreichen der definierten Drehwinkelposition δ_{def} zu erzeugen, ist das Abschirmelement 70 in einer entsprechenden, der definierten Drehwinkelposition δ_{def} zugeordneten Position in Umfangsrichtung am Statorhalter 31 befestigt.

Das vom Empfangselement empfangene Signal M_{Ink_planar}, welches in diesem Fall die planare Magnetfeldstärke wiedergibt, kann unmittelbar als Ausgangssignal bereitgestellt werden und zu einem Steuergerät übertragen werden in welchem dann eine Auswertung erfolgen kann, um die Anzahl der Umdrehungen der Lenkwelle zu bestimmen. Selbstverständlich ist es auch möglich, den erzeugten Signalimpuls als Trigger für eine Schaltfunktion vorzusehen, welche bei Über- oder Unterschreiten einer bestimmten Feldstärke einen Ausgang schaltet.

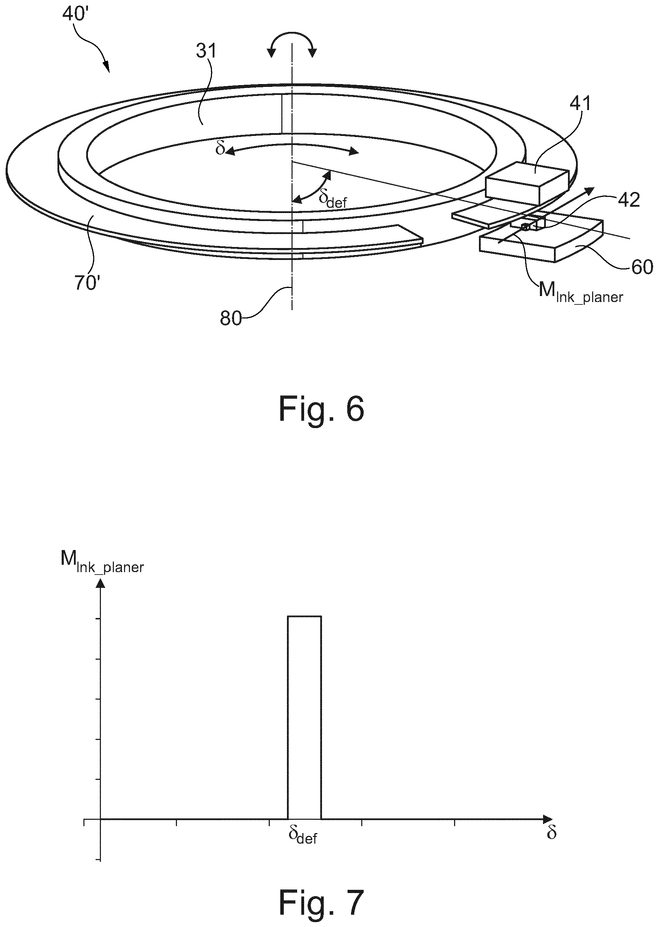

Fig. 6 zeigt ein alternatives Ausführungsbeispiel einer Inkrementalsensoreinrichtung 40' für eine erfindungsgemäße Sensorvorrichtung, wobei bei diesem Ausführungsbeispiel das Abschirmelement 70' durch eine in Umfangsrichtung geöffnete Ringscheibe 70' gebildet wird, wobei die Position der Öffnung der Ringscheibe 70' in Umfangsrichtung der definierten Drehwinkelposition δ_{def} zugeordnet ist. In diesem Fall wird der Signalimpuls erzeugt, indem die Unterbrechung des Signalweges bei Erreichen der vordefinierten Drehwinkelposition δ_{def} aufgrund der Öffnung in der Ringscheibe 70' aufgehoben wird, d.h. wenn sich die Öffnung in der Ringscheibe 70' zwischen dem Sendeelement 41 und dem Empfangselement 42 befindet.

Der sich in diesem Fall einstellende, zugehörige Verlauf des vom Empfangselement 42 empfangenen Signals M_{Ink_planar} ist in Fig. 7 dargestellt.

Über die Breite des Abschirmelementes 70 bzw. 70' in Umfangsrichtung, d.h. über die Breite des Flügels bzw. der Öffnung, kann die Impulsdauer des Signalimpulses beeinflusst werden. Selbstverständlich ist es auch möglich, mehrere Abschirmelemente oder ein als geöffnete Ringscheibe ausgebildetes Abschirmelement mit mehreren Öffnungen vorzusehen, so dass an mehreren, definierten Drehwinkelpositionen ein Signalimpuls erzeugt werden kann.

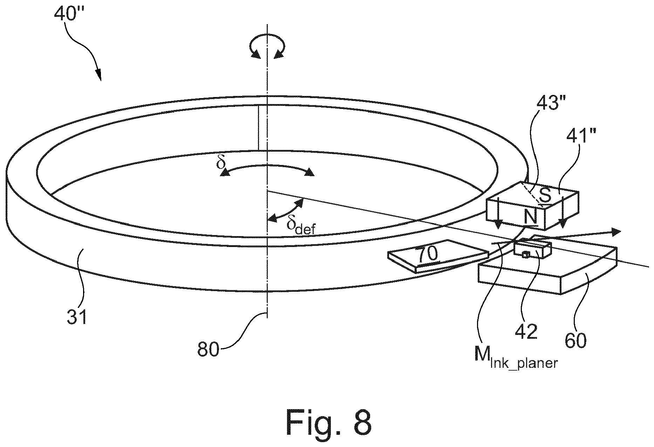

Fig. 8 zeigt eine weitere mögliche Ausführungsform einer Inkrementalsensoreinrichtung 40", wobei bei dieser Ausführungsform im Gegensatz zu den vorbeschriebenen Ausführungsbeispielen die Trennebene 43' zwischen dem Nordpol N und dem Südpol S des Sendeelementes 41" nicht in radialer Richtung orientiert ist, sondern in einem Winkel dazu, aber weiterhin parallel zur Drehachse 80, so dass sich die Feldlinien des vom Sendeelement 41" erzeugten Magnetfeldes nicht in tangentialer Richtung in der planaren Ebene 90 ausrichten, sondern in einer radial-tangentialen Richtung.

Dies hat zur Folge, dass sich beim Annähern einer Kante des Abschirmelementes 70 bzw. 70' die Feldlinien drehen. Beim Hindurchbewegen des Abschirmelementes 70 bzw. 70' zwischen dem Sendeelement 41" und dem Empfangselement 42 wird dann nicht nur die Feldstärke sondern auch die Feldrichtung moduliert. Dadurch kann nicht nur eine vorbestimmte, definierte Drehwinkelposition δ_{def} erkannt werden, sondern zusätzlich eine Drehrichtung, mit welcher die vorbestimmte Drehwinkelposition δ_{def} erreicht worden ist, d.h. es kann außerdem erkannt werden, ob sich die Lenkwelle zuletzt links oder rechts herum gedreht hat.

Um diesen Effekt nutzen zu können, ist es vorteilhaft, wenn das Empfangselement 42, also der Hall-Sensor 42, durch einen magnetischen Sensor gebildet wird, der dazu ausgebildet ist, zusätzlich zur Erfassung der Feldstärke eines Magnetfeldes auch die Feldrichtung in der planaren Ebene 90 zu detektieren.

Eine ähnliche Wirkung wie mit einer nicht in einer radialen Richtung orientierten Trennebene 43, sondern in einer mit einem Winkel zur radialen Richtung orientierten Trennebene 43', kann jedoch auch erreicht werden, indem die Kanten des Abschirmelementes 70, 70' jeweils entsprechend in einem Winkel zur radialen Richtung verlaufen. D.h. die Kanten des Flügels bzw. die Kanten der Öffnung der Ringscheibe sind nicht in radialer Richtung orientiert, sondern schräg dazu.

Ebenfalls ist es auch denkbar, statt eines Vollmagneten als Sendeelement 41 bzw. 41" ein Sendeelement mit einer lediglich 2-poligen Oberflächenmagnetisierung vorzusehen, wobei die beiden Pole, d.h. der Nordpol N und der Südpol S, dabei vorzugsweise jedoch auf der dem Empfangselement 42 zugewandten Oberfläche ausgebildet sind.

Denkbar ist es selbstverständlich auch, lediglich eine Magnetisierung in einer zur Ebene 90 parallelen Ebene innerhalb des Sendeelementes vorzusehen.

Bei den vorbeschriebenen Ausführungsbeispielen sind das Sendeelement 41 bzw. 41" und das Empfangselement 42 dabei jeweils in axialer Richtung beabstandet voneinander in parallelen Ebenen angeordnet, d.h. im Wesentlichen gegenüberliegend. Es ist aber auch möglich, das Sendeelement gehäusefest radial außerhalb des Empfangselementes anzuordnen, wenn das Empfangselement ein magnetischer Sensor ist und das Sendeelement als Magnet ausgebildet ist. Denn auch bei einer derartigen Anordnung ändert sich beim Vorbeibewegen des Abschirmelementes 70 bzw. 70' am Empfangselement 42 die Stärke und/oder Richtung des vom Sendeelement erzeugten Magnetfeldes. Derartige Anordnungen mit einem magnetischen Sendeelement und einem magnetischen Sensor als Empfangselement mit einem nicht zwischen dem Sendeelement und dem Empfangselement angeordneten, ferromagnetischen Target, wobei bei einer entsprechend ausgebildeten, erfindungsgemäßen Sensorvorrichtung das Abschirmelement 70 bzw. 70' das Target bilden würde, sind aus dem Stand der Technik grundsätzlich bekannt und werden beispielsweise bei Detektion einer Position von Kurbelwellen oder Nockenwellen oder bei ABS-Systemen eingesetzt. Exemplarisch wird hierzu auf die US 5,814,985 verwiesen.

Selbstverständlich ist es auch möglich, statt eines Magneten als Sendeelement 41, 41" eine Lichtquelle als Sendeelement 41, 41" einzusetzen und dementsprechend anstatt eines magnetischen Sensors 42 einen Lichtsensor als Empfangselement 42 vorzusehen, welche eine optische Lichtschranke bilden und in einer Vielzahl von Bauformen erhältlich sind. Das Abschirmelement 70, 70' ist in diesem Fall derart opak auszugestalten, dass eine Abschattung oder eine Unterbrechung der Abschattung des Lichtsensors 42 bewirkt werden kann.

Vorteilhaft an der Verwendung einer optischen Lichtschranke ist insbesondere, dass das Abschirmelement 70, 70" aus Kunststoff hergestellt werden kann und beispielsweise direkt an den Statorhalter 31 angespritzt sein kann.

Ein Nachteil bei optischen Systemen ist jedoch die Gefahr der Verschmutzung von Sendeelement 41, 41" und/oder Empfangselement 42, beispielsweise durch Schmierfett oder dergleichen im Bauraum, sowie das Niederschlagen von Feuchtigkeit, wobei der Einfluss der Verschmutzung in vielen Fällen jedoch durch entsprechende Kompensationsalgorithmen in der Steuerungseinrichtung reduziert bzw. herausgerechnet werden kann.

Selbstverständlich können auch andere Messprinzipien, wie beispielsweise induktive oder kapazitive Messprinzipien eingesetzt werden, um ein vom Sendelement 41, 41" der Inkrementalsensoreinrichtung ausgesendetes Signal mittels eines Empfangselementes 42 zu empfangen.

Beispielsweise können das Sendeelement 41, 41" und das Empfangselement 42 auch jeweils durch eine induktive Spule gebildet sein in Verbindung mit einem metallischen Abschirmelement 70, 70", um eine induktive Kopplung des Sendeelements 41, 41" mit dem Empfangselement 42 beeinflussen und einen Signalimpuls erzeugen zu können.

## Patentansprüche

1. Sensorvorrichtung (100) mit einer Inkrementalsensoreinrichtung (40, 40', 40") für eine um eine Drehachse drehbare Welle, insbesondere für eine Lenkwelle eines Kraftfahrzeugs, wobei die Inkrementalsensoreinrichtung (40, 40', 40") zur Erfassung wenigstens einer definierten Drehwinkelposition (δ_{def}) der Welle ausgebildet ist und ein Sendeelement (41, 41") und ein gehäusefest angeordnetes Empfangselement (42) aufweist, wobei ein vom Sendeelement (41, 41") ausgesendetes und entlang eines Signalweges übertragenes Signal (M_{Ink_planar}) vom Empfangselement (42) empfangbar ist, wobei anhand des vom Empfangselement (42) empfangenen Signals (M_{Ink_planar}) erkennbar ist, ob sich die Welle in der definierten Drehwinkelposition (δ_{def}) befindet oder nicht, und wobei die Inkrementalsensoreinrichtung (40, 40', 40") dazu ausgebildet ist, bei Erreichen der definierten Drehwinkelposition (δ_{def}) der Welle einen Signalimpuls zu erzeugen, und wobei das Sendeelement (41, 41") gehäusefest angeordnet ist, wobei durch eine Rotationsbewegung der Welle eine Änderung des vom Empfangselement (42) empfangenen Signals (M_{Ink_planar}) bewirkbar ist, wobei die Inkrementalsensoreinrichtung (40, 40', 40") ein drehfest mit der Welle koppelbares, sich in radialer Richtung nach außen erstreckendes Abschirmelement (70, 70') aufweist, wobei das Abschirmelement (70, 70') dazu ausgebildet ist, das vom Sendeelement (41, 41") an das Empfangselement (42) übertragene Signal (M_{Ink_planar}) in Abhängigkeit von einer Drehwinkelposition (δ) der Welle zu beeinflussen, so dass durch eine Rotationsbewegung der Welle eine Änderung des vom Empfangselement (42) empfangenen Signals (M_{Ink_planar}) bewirkbar ist, **dadurch gekennzeichnet, dass** das Abschirmelement (70, 70') sich bei Erreichen oder außerhalb der definierten Drehwinkelposition (δ_{def}) der Welle in den Signalweg zwischen dem Sendeelement (41, 41") der Inkrementalsensoreinrichtung (40, 40', 40") und dem Empfangselement (42) der Inkrementalsensoreinrichtung (40, 40', 40") hinein erstreckt und den Signalweg zwischen dem Sendeelement (41, 41") und dem Empfangselement (42) unterbricht, wobei das Abschirmelement (70, 70') an einer, der definierten Drehwinkelposition (δ_{def}) zugeordneten Position in Umfangsrichtung mit der Welle koppelbar ist.

2. Sensorvorrichtung (100) nach einem der vorgenannten Ansprüche,
**dadurch gekennzeichnet, dass** das Abschirmelement (70, 70') ein scheibenförmig ausgebildetes Segment ist, insbesondere ein ringscheibenförmiges Segment, wobei das Abschirmelement (70, 70') vorzugsweise ein an einer, der definierten Drehwinkelposition (δ_{def}) zugeordneten Position mit der Welle koppelbarer Flügel (70) ist oder eine in Umfangsrichtung geöffnete Ringscheibe (70') mit einer der definierten Drehwinkelposition (δ_{def}) zugeordneten Position der Öffnung der Ringscheibe (70') in Umfangsrichtung.

3. Sensorvorrichtung (100) nach einem der vorgenannten Ansprüche,
**dadurch gekennzeichnet, dass** das Sendeelement (41, 41") ein Magnet ist, vorzugsweise ein Permanentmagnet, und das Empfangselement (42) ein Magnetsensor, insbesondere ein Hall-Sensor, wobei das Abschirmelement (70, 70') vorzugsweise ferromagnetisch ausgebildet ist.

4. Sensorvorrichtung (100) nach Anspruch 3,
**dadurch gekennzeichnet, dass** der Magnetsensor (42) der Inkrementalsensoreinrichtung (40, 40', 40") in axialer Richtung unempfindlich ausgebildet ist und in tangentialer und/oder radialer Richtung sensitiv.

5. Sensorvorrichtung (100) nach Anspruch 3 oder 4,
**dadurch gekennzeichnet, dass** der das Sendeelement (41, 41") der Inkrementalsensoreinrichtung (40, 40', 40") bildende Magnet (41, 41") zweipolig ausgebildet ist, wobei der Magnet (41, 41") vorzugsweise scheibenförmig ausgebildet ist.

6. Sensorvorrichtung (100) nach einem der Ansprüche 3 bis 5,
**dadurch gekennzeichnet, dass** eine die Pole (N, S) des Magneten (41) der Inkrementalsensoreinrichtung (40, 40', 40") trennende Trennebene (43) in radialer Richtung orientiert ist.

7. Sensorvorrichtung (100) nach einem der Ansprüche 3 bis 5,
**dadurch gekennzeichnet, dass** die Trennebene (43') zur Poltrennung der Pole (N, S) des Magneten (41") der Inkrementalsensoreinrichtung (40, 40', 40") in einem Winkel zur radialen Richtung orientiert ist.

8. Sensorvorrichtung (100) nach einem der Ansprüche 1 bis 2,
**dadurch gekennzeichnet, dass** das Sendeelement (41) eine Lichtquelle ist und das Empfangselement (42) ein Lichtsensor, wobei das Abschirmelement (70, 70') opak ausgebildet ist und mittels des Abschirmelementes (70, 70') eine Abschattung des Lichtsensors (42) bewirkbar ist.

9. Sensorvorrichtung (100) nach einem der Ansprüche 1 bis 2,
**dadurch gekennzeichnet, dass** das Sendeelement (41) und das Empfangselement (42) jeweils durch wenigstens eine induktive Spule gebildet sind, wobei das Abschirmelement (70, 70') metallisch ausgebildet ist und mittels des Abschirmelementes (70, 70') eine induktive Kopplung des Sendeelementes (41) mit dem Empfangselement (42) beeinflussbar ist.

10. Sensorvorrichtung (100) nach einem der vorgenannten Ansprüche, **dadurch gekennzeichnet, dass** die Sensorvorrichtung (100) zusätzlich eine Drehmomentsensoreinrichtung (20) aufweist, wobei die Drehmomentsensoreinrichtung (20) zur Erfassung eines auf die Welle aufgebrachten Drehmoments ausgebildet ist, vorzugsweise zur Erfassung eines auf eine Welle mit einem ersten Teil und einem, relativ zum ersten Teil verdrehbaren, zweiten Teil aufgebrachten Drehmoments, wobei insbesondere der erste und der zweite Teil der Welle mittels eines Torsionsstabs miteinander verbunden sind.

11. Sensorvorrichtung (100) nach Anspruch 10, **dadurch gekennzeichnet, dass** die Drehmomentsensoreinrichtung (20) einen drehfest mit dem ersten Teil der Welle verbindbaren Ringmagneten, einen gehäusefest angeordneten Drehmoment-Magnetsensor (22) und einen, mit dem zweiten Teil der Welle drehfest verbindbaren Stator (30) zum Leiten eines magnetischen Flusses vom Ringmagneten zum Drehmoment-Magnetsensor (22) aufweist.

12. Sensorvorrichtung (100) nach Anspruch 11, **dadurch gekennzeichnet, dass** das Abschirmelement (70, 70') der Inkrementalsensoreinrichtung (40, 40', 40") drehfest mit dem Stator (30) der Drehmomentsensoreinrichtung (20) verbunden ist, wobei das Abschirmelement (70, 70') vorzugsweise am Stator (30) befestigt ist, insbesondere an einem Statorhalter (31).

13. Kraftfahrzeug mit einer Lenkwelle und einer Sensorvorrichtung (100) zur Erfassung wenigstens einer definierten Drehwinkelposition (def) der Lenkwelle,
**dadurch gekennzeichnet, dass** die Sensorvorrichtung (100) nach einem der Ansprüche 1 bis 12 ausgebildet ist.

## Claims

1. Sensor device (100) having an incremental sensor unit (40, 40', 40") for a shaft rotatable about a rotational axis, in particular for a steering shaft of a motor vehicle, wherein the incremental sensor unit (40, 40', 40") is designed for acquiring at least one defined rotational angle position (δ_{def}) of the shaft and comprises a transmitting element (41, 41") and a housing-fixed receiving element (42), wherein a signal (M_{Ink_planar}) emitted by the transmitting element (41, 41") and transmitted along a signal path is receivable by the receiving element (42), wherein it is recognizable on the basis of the signal (M_{Ink_planar}) received by the receiving element (42) whether the shaft is located in the defined rotational angle position (δ_{def}) or not, and wherein the incremental sensor unit (40, 40', 40") is designed to generate a signal pulse upon reaching the defined rotational angle position (δ_{def}) of the shaft,
and wherein the transmitting element (41, 41") is arranged fixed on the housing, wherein a change of the signal (M_{Ink_planar}) received by the receiving element (42) can be caused by a rotational movement of the shaft, wherein the incremental sensor unit (40, 40', 40") comprises a shielding element (70, 70'), which can be coupled in a rotationally-fixed manner to the shaft and extends outward in the radial direction, wherein the shielding element (70, 70') is designed to influence the signal (M_{Ink_planar}) transmitted from the transmitting element (41, 41") to the receiving element (42) as a function of a rotational angle position (δ) of the shaft so that a change of the signal (M_{Ink_planar}) received by the receiving element (42) can be caused by a rotational movement of the shaft, **characterized in that** the shielding element (70, 70'), upon reaching or outside the defined rotational angle position (δ_{def}) of the shaft, extends into the signal path between the transmitting element (41, 41") of the incremental sensor unit (40, 40', 40") and the receiving element (42) of the incremental sensor unit (40, 40', 40") and interrupts the signal path between the transmitting element (41, 41") and the receiving element (42), wherein the shielding element (70, 70') can be coupled to the shaft at a position in the circumferential direction associated with the defined rotational angle position (δ_{def}).

2. Sensor device (100) according to any one of the preceding claims,
**characterized in that** the shielding element (70, 70') is a disk-shaped segment, in particular a ring-disk-shaped segment, wherein the shielding element (70, 70') is preferably a wing (70) which can be coupled to the shaft at a position associated with the defined rotational angle position (δ_{def}) or a ring disk (70') open in the circumferential direction having a position of the opening of the ring disk (70') in the circumferential direction associated with the defined rotational angle position (δ_{def}).

3. Sensor device (100) according to any one of the preceding claims, **characterized in that** the transmitting element (41, 41") is a magnet, preferably a permanent magnet, and the receiving element (42) is a magnetic sensor, in particular a Hall sensor, wherein the shielding element (70, 70') is preferably made ferromagnetic.

4. Sensor device (100) according to Claim 3,
**characterized in that** the magnetic sensor (42) of the incremental sensor unit (40, 40', 40") is designed as insensitive in the axial direction and sensitive in the tangential and/or radial direction.

5. Sensor device (100) according to Claim 3 or 4,
**characterized in that** the magnet (41, 41") forming the transmitting element (41, 41") of the incremental sensor unit (40, 40', 40") is designed as bipolar, wherein the magnet (41, 41") is preferably formed in a disk shape.

6. Sensor device (100) according to any one of Claims 3 to 5,
**characterized in that** a partition plane (43) which separates the poles (N, S) of the magnet (41) of the incremental sensor unit (40, 40', 40") is oriented in the radial direction.

7. Sensor device (100) according to any one of Claims 3 to 5,
**characterized in that** the partition plane (43') for pole separation of the poles (N, S) of the magnet (41") of the incremental sensor unit (40, 40', 40") is oriented at an angle in relation to the radial direction.

8. Sensor device (100) according to either one of Claims 1 and 2,
**characterized in that** the transmitting element (41) is a light source and the receiving element (42) is a light sensor, wherein the shielding element (70, 70') is made opaque and shading of the light sensor (42) can be caused by means of the shielding element (70, 70').

9. Sensor device (100) according to either one of Claims 1 and 2,
**characterized in that** the transmitting element (41) and the receiving element (42) are each formed by at least one inductive coil, wherein the shielding element (70, 70') is made metallic and inductive coupling of the transmitting element (41) with the receiving element (42) can be influenced by means of the shielding element (70, 70').

10. Sensor device (100) according to any one of the preceding claims, **characterized in that** the sensor device (100) additionally comprises a torque sensor unit (20), wherein the torque sensor unit (20) is designed to acquire a torque applied to the shaft, preferably to acquire a torque applied to a shaft having a first part and a second part which can be twisted in relation to the first part, wherein in particular the first and the second parts of the shaft are connected to one another by means of a torsion bar.

11. Sensor device (100) according to Claim 10, **characterized in that** the torque sensor unit (20) comprises a ring magnet connectable in a rotationally-fixed manner to the first part of the shaft, a housing-fixed torque magnetic sensor (22), and a stator (30) connectable in a rotationally-fixed manner to the second part of the shaft for conducting a magnetic flux from the ring magnet to the torque magnetic sensor (22).

12. Sensor device (100) according to Claim 11, **characterized in that** the shielding element (70, 70') of the incremental sensor unit (40, 40', 40") is connected in a rotationally-fixed manner to the stator (30) of the torque sensor unit (20), wherein the shielding element (70, 70') is preferably fastened on the stator (30), in particular on a stator holder (31).

13. Motor vehicle having a steering shaft and a sensor device (100) for acquiring at least one defined rotational angle position (def) of the steering shaft, **characterized in that** the sensor device (100) is designed according to any one of Claims 1 to 12.

## Revendications

1. Arrangement de détection (100) comprenant un dispositif capteur incrémental (40, 40', 40") pour un arbre pouvant tourner autour d'un axe de rotation, notamment pour un arbre de direction d'un véhicule automobile, le dispositif capteur incrémental (40, 40', 40") étant configuré pour détecter au moins une position angulaire de rotation définie (δ_{def}) de l'arbre et possédant un élément émetteur (41, 41") et un élément récepteur (42) disposé à demeure sur un boîtier, un signal (M_{Ink_planar}) émis par l'élément émetteur (41, 41") et transmis le long d'un trajet de signal pouvant être reçu par l'élément récepteur (42), le signal (M_{Ink_planar}) reçu par l'élément récepteur (42) permettant de reconnaître si l'arbre se trouve ou non dans la position angulaire de rotation définie (δ_{def}) et le dispositif capteur incrémental (40, 40', 40") étant configuré pour générer une impulsion de signal lorsque la position angulaire de rotation définie (δ_{def}) de l'arbre est atteinte, l'élément émetteur (41, 41") étant disposé à demeure sur un boîtier, un mouvement de rotation de l'arbre pouvant produire une modification du signal (M_{INk_planar}) reçu par l'élément récepteur (42),
le dispositif capteur incrémental (40, 40', 40") possédant un élément de blindage (70, 70') pouvant être accouplé en rotation solidaire avec l'arbre et s'étendant dans la direction radiale vers l'extérieur, l'élément de blindage (70, 70') étant configuré pour influencer le signal (M_{Ink_planar}) transmis à l'élément récepteur (42) par l'élément émetteur (41, 41") en fonction d'une position angulaire de rotation (δ) de l'arbre, de sorte qu'un mouvement de rotation de l'arbre permet de produire une modification du signal (M_{Ink_planar}) reçu par l'élément récepteur (42),
**caractérisé en ce que** l'élément de blindage (70, 70'), lorsque la position angulaire de rotation définie (δ_{def}) de l'arbre est atteinte ou en-dehors de celle-ci, s'étend à l'intérieur du trajet du signal entre l'élément émetteur (41, 41") du dispositif capteur incrémental (40, 40', 40") et l'élément récepteur (42) du dispositif capteur incrémental (40, 40', 40") et interrompt le trajet du signal entre l'élément émetteur (41, 41") et l'élément récepteur (42), l'élément de blindage (70, 70') pouvant être accouplé à l'arbre au niveau d'une position associée à la position angulaire de rotation définie (δ_{def}) dans la direction périphérique.

2. Arrangement de détection (100) selon l'une des revendications précédentes, **caractérisé en ce que** l'élément de blindage (70, 70') est un segment configuré en forme de disque, notamment un segment en forme de disque annulaire, l'élément de blindage (70, 70') étant de préférence une ailette (70) pouvant être accouplée à l'arbre au niveau d'une position associée à la position angulaire de rotation définie (δ_{def}) ou un disque annulaire (70') ouvert dans la direction périphérique doté d'une position associée à la position angulaire de rotation définie (δ_{def}) de l'ouverture du disque annulaire (70') dans la direction périphérique.

3. Arrangement de détection (100) selon l'une des revendications précédentes, **caractérisé en ce que** l'élément émetteur (41, 41") est un aimant, de préférence un aimant permanent, et l'élément récepteur (42) est un capteur magnétique, notamment un capteur à effet Hall, l'élément de blindage (70, 70') étant de préférence de configuration ferromagnétique.

4. Arrangement de détection (100) selon la revendication 3, **caractérisé en ce que** le capteur magnétique (42) du dispositif capteur incrémental (40, 40', 40") est configuré insensible dans la direction axiale et sensible dans la direction tangentielle et/ou radiale.

5. Arrangement de détection (100) selon la revendication 3 ou 4, **caractérisé en ce que** l'aimant (41, 41") qui forme l'élément émetteur (41, 41") du dispositif capteur incrémental (40, 40', 40") est de configuration bipolaire, l'aimant (41, 41") étant de préférence réalisé en forme de disque.

6. Arrangement de détection (100) selon l'une des revendications 3 à 5, **caractérisé en ce qu'**un plan de séparation (43) qui sépare les pôles (N, S) de l'aimant (41) du dispositif capteur incrémental (40, 40', 40") est orienté dans la direction radiale.

7. Arrangement de détection (100) selon l'une des revendications 3 à 5, **caractérisé en ce que** le plan de séparation (43') servant à la séparation des pôles (N, S) de l'aimant (41") du dispositif capteur incrémental (40, 40', 40") est orienté selon un certain angle par rapport à la direction radiale.

8. Arrangement de détection (100) selon l'une des revendications 1 et 2, **caractérisé en ce que** l'élément émetteur (41) est une source de lumière et l'élément récepteur (42) un capteur de lumière, l'élément de blindage (70, 70') étant de configuration opaque et une projection d'ombre sur le capteur de lumière (42) pouvant être produite au moyen de l'élément de blindage (70, 70').

9. Arrangement de détection (100) selon l'une des revendications 1 et 2, **caractérisé en ce que** l'élément émetteur (41) et l'élément récepteur (42) sont respectivement formés par au moins une bobine inductive, l'élément de blindage (70, 70') étant de configuration métallique et un couplage inductif de l'élément émetteur (41) avec l'élément récepteur (42) pouvant être influencé au moyen de l'élément de blindage (70, 70').

10. Arrangement de détection (100) selon l'une des revendications précédentes, **caractérisé en ce que** l'arrangement de détection (100) possède en outre un dispositif capteur de couple (20), le dispositif capteur de couple (20) étant configuré pour détecter un couple appliqué sur l'arbre, de préférence pour détecter un couple appliqué sur un arbre ayant une première partie et une deuxième partie pouvant tourner par rapport à la première partie, la première et la deuxième partie de l'arbre étant notamment reliées ensemble au moyen d'une barre de torsion.

11. Arrangement de détection (100) selon la revendication 10, **caractérisé en ce que** le dispositif capteur de couple (20) possède un aimant annulaire pouvant être relié en rotation solidaire à la première partie de l'arbre, un capteur magnétique de couple (22) disposé à demeure sur un boîtier et un stator (30), pouvant être relié en rotation solidaire à la deuxième partie de l'arbre, destiné à conduire un flux magnétique de l'aimant annulaire vers le capteur magnétique de couple (22).

12. Arrangement de détection (100) selon la revendication 11, **caractérisé en ce que** l'élément de blindage (70, 70') du dispositif capteur incrémental (40, 40', 40") est relié en rotation solidaire au stator (30) du dispositif capteur de couple (20), l'élément de blindage (70, 70') étant de préférence fixé au stator (30), notamment à un porte-stator (31).

13. Véhicule automobile comprenant un arbre de direction et un arrangement de détection (100) servant à détecter au moins une position angulaire de rotation définie (def) de l'arbre de direction, **caractérisé en ce que** l'arrangement de détection (100) est réalisé selon l'une des revendications 1 à 12.
